# EUROPEAN PATENT APPLICATION

(11) **EP 4 821 718 A1**
(43) Date of publication of application: **14.10.2026**
(21) Application number: 26161467.1
(22) Date of filing: 27.02.2026
(51) Int. Cl.: B60K 1/00

(54) **ELECTRIC VEHICLE**

(30) Priority: 11.04.2025 JP 2025065410
(71) Applicant: Suzuki Motor Corporation, Hamamatsu-shi, Shizuoka 432-8611 (JP)
(72) Inventor: HAYASHI, Tsubasa, Hamamatsu-shi, 432-8611 (JP)
(74) Representative: Haseltine Lake Kempner LLP

(57) **Abstract**

An electric vehicle V includes a drive unit 4, a pair of side frames 61a and 61b, and a cross member 63. The drive unit 4 is mounted to the cross member 63 at a plurality of mounting portions 641a and 641b arranged so as to sandwich the rotational axis in the vehicle lateral direction (DW), and is supported relative to the pair of side frames 61a and 61b via the cross member 63. The cross member 63 includes a main body portion 631, and a pair of coupling portions 632a and 632b, and each of the coupling portions 632a and 632b is coupled to a corresponding one of the side frames 61a and 61b. The main body portion 631 includes an intermediate portion 63a located between two of the mounting portions 641a and 641b that sandwich the rotational axis, and arm portions 63b1 and 63b2 extending outward in the vehicle lateral direction DW from the intermediate portion 63a. The main body portion 631 is formed such that a vertical dimension of the arm portions 63b1 and 63b2 decreases from an inner side toward an outer side in the vehicle lateral direction DW, and the arm portions 63b1 and 63b2 are connected to the coupling portions 632a and 632b at outer ends thereof. The outer ends of the arm portions 63b1 and 63b2 are aligned with the mounting portions 641a and 641b in the vehicle lateral direction DW.

## Description

### BACKGROUND OF THE INVENTION

### Field of the Invention

The present invention relates to an electric vehicle.

### Description of the Related Art

There exists an electric vehicle that is equipped with an electric motor as a driving power source and is configured to travel by power generated by the electric motor.

### Citation List

### Patent Document

Patent Document 1: Japanese Patent Laid-Open No. S49-002007

In the electric vehicle disclosed in Patent Document 1, a battery is disposed rearward of an upstanding portion of a side member that forms part of a chassis frame, that is, in the vicinity of a central region of the vehicle body in the vehicle longitudinal direction. An electric motor is arranged rearward of the battery, specifically near a rear end portion of the vehicle body, together with a reduction gear.

Patent Document 1 does not disclose details of a support mechanism configured to support the electric motor relative to the chassis frame.

Meanwhile, there exists a support mechanism in which a drive unit including an electric motor is supported via a cross member extending between a pair of side frames. The cross member is required to suppress displacement caused by vibrations transmitted from the drive unit during vehicle operation and to ensure stable support of the drive unit.

### SUMMARY OF THE INVENTION

In consideration of such circumstances, an object of the present invention is to provide an electric vehicle capable of stably supporting a drive unit serving as a driving power source for vehicle travel.

To solve the above-mentioned problem, an electric vehicle according to one aspect of the present invention includes a drive unit serving as a driving power source for propelling the vehicle, a pair of side frames extending in a vehicle longitudinal direction and arranged spaced apart from each other in a vehicle lateral direction, and a cross member extending between the pair of side frames.

The drive unit includes an electric motor having a rotational axis extending in the vehicle longitudinal direction, and an inverter configured to control electric power supplied to the electric motor.

In this aspect, the drive unit may be mounted to the cross member at a plurality of mounting portions arranged so as to sandwich the rotational axis in the vehicle lateral direction, and may be supported relative to the pair of side frames via the cross member.

The cross member may include a main body portion extending in the vehicle lateral direction in front of the drive unit, and a pair of coupling portions provided continuously at opposite ends of the main body portion in the vehicle lateral direction. Each of the pair of coupling portions may be coupled to a corresponding one of the side frames.

The main body portion may include an intermediate portion located between two of the mounting portions that sandwich the rotational axis, and arm portions extending outward in the vehicle lateral direction from the intermediate portion.

The main body portion may be formed such that a vertical dimension of the arm portions decreases from an inner side toward an outer side in the vehicle lateral direction, and the arm portions are connected to the coupling portions at outer ends thereof.

The outer ends of the arm portions may be aligned with the mounting portions in the vehicle lateral direction.

The drive unit may be mounted to the cross member using mount bushes at the respective two mounting portions.

A vertical dimension of the intermediate portion of the main body portion may be set to be greater than a diameter of the mount bushes.

The electric vehicle may further include a bracket attached to a front surface portion of the drive unit.

In this aspect, the drive unit may be mounted to the cross member via the bracket, and the bracket may be connected to the cross member via the mount bushes.

The cross member may be disposed below the rotational axis such that the cross member overlaps, in the vehicle longitudinal direction, a lower front portion of the drive unit.

The bracket may be disposed between the lower front portion and the cross member such that the bracket is concealed behind the cross member in a front view of the electric vehicle.

The main body portion may be configured by dividing it into a first member forming the intermediate portion and second members forming the arm portions.

The second members may be formed so as to be separable above and below relative to the mounting portions.

The pair of side frames may respectively include a front frame portion extending in the vehicle longitudinal direction, a rear frame portion disposed rearward of and above the front frame portion and extending in the vehicle longitudinal direction, and a connecting portion connecting the front frame portion and the rear frame portion and inclined upward toward the rear

In this aspect, the cross member may be coupled to the pair of side frames at the connecting portions.

The electric vehicle may further include a battery case configured to accommodate a battery capable of storing electric power supplied to the electric motor, and supported between the pair of side frames.

In this aspect, the drive unit may be disposed below the battery case.

The electric vehicle may further include a cab disposed above the front frame portions.

In this aspect, the rear frame portions may support a deck floor of a cargo bed (2) disposed behind the cab, and the battery case may be disposed directly below the deck floor.

According to one aspect of the present invention, the vertical positions of the outer ends of the arm portions (i.e., the coupling portions) and the mounting portions of the cross member are aligned with each other. As a result, displacement of the cross member caused by vibrations transmitted from the drive unit during vehicle operation is suppressed, thereby enabling the drive unit to be supported in a stable manner.

### BRIEF DESCRIPTION OF THE DRAWINGS

FIG. 1 is a side view of an electric vehicle according to one embodiment of the present invention.
FIG. 2 is a cross-sectional view of the electric vehicle taken along line X-X in FIG. 1.
FIG. 3A is a cross-sectional view of the electric vehicle taken along line Y-Y and FIG. 3B is a cross-sectional view of the electric vehicle taken along line Z-Z in FIG. 2.
FIG. 4 is an enlarged cross-sectional view of a portion of the electric vehicle shown in FIG. 3A, illustrating the positional relationship among a drive unit, a side frame, and a bracket.
FIG. 5 is an enlarged cross-sectional view of a portion of the electric vehicle shown in FIG. 3B, illustrating the positional relationship among the drive unit, the side frame, and the bracket.
FIG. 6 is a side view of a drive unit provided in the electric vehicle shown in FIG. 1.
FIGS. 7A and 7B are front views of the drive unit shown in FIG. 6.
FIGS. 8A and 8B are bottom views of the drive unit shown in FIG. 6.
FIG. 9 is a perspective view showing the drive unit, the side frame, and a support mechanism provided in the electric vehicle shown in FIG. 1 in an assembled state.
FIGS. 10A and 10B are perspective views illustrating the positional relationship among the drive unit, a power transmission mechanism, and a battery case provided in the electric vehicle shown in FIG. 1.
FIG. 11A is a perspective view illustrating the positional relationship between the side frame and the battery case of the electric vehicle and FIG. 11B is a plan view illustrating the positional relationship between the side frame and the battery case of the electric vehicle shown in FIG. 1.
FIG. 12A is a plan view illustrating the positional relationship among the drive unit, the side frame, and the bracket of the electric vehicle and FIG. 12B is a bottom view illustrating the positional relationship among the drive unit, the side frame, and the bracket of the electric vehicle shown in FIG. 1.
FIG. 13 is a plan view showing the drive unit and peripheral components provided in the electric vehicle shown in FIG. 1 in an assembled state.
FIG. 14 is a front view illustrating the positional relationship between the drive unit and a cross member of the electric vehicle shown in FIG. 1.

### DETAILED DESCRIPTION OF THE PREFERRED EMBODIMENT

An embodiment of the present invention is described below with reference to drawings.

### (Overall Configuration of the Electric Vehicle)

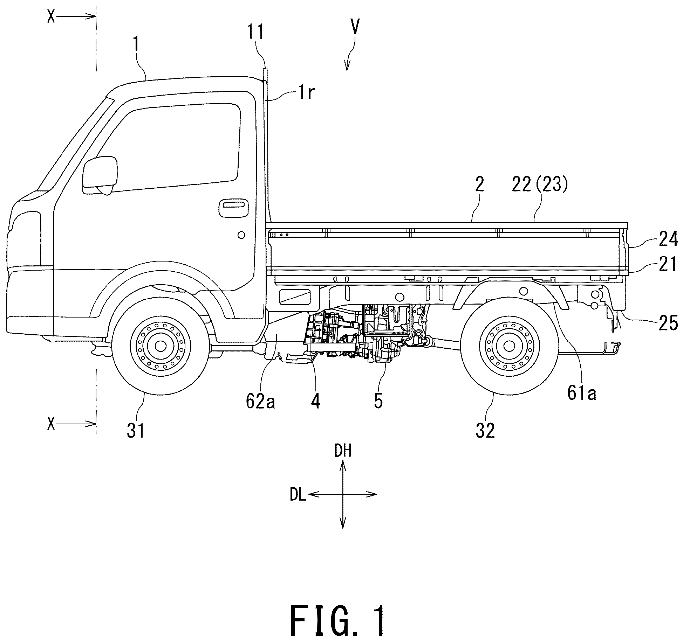

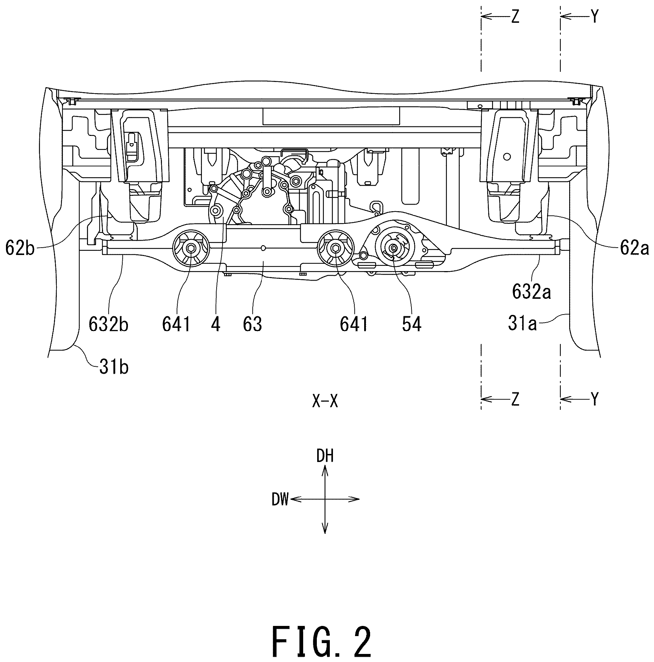

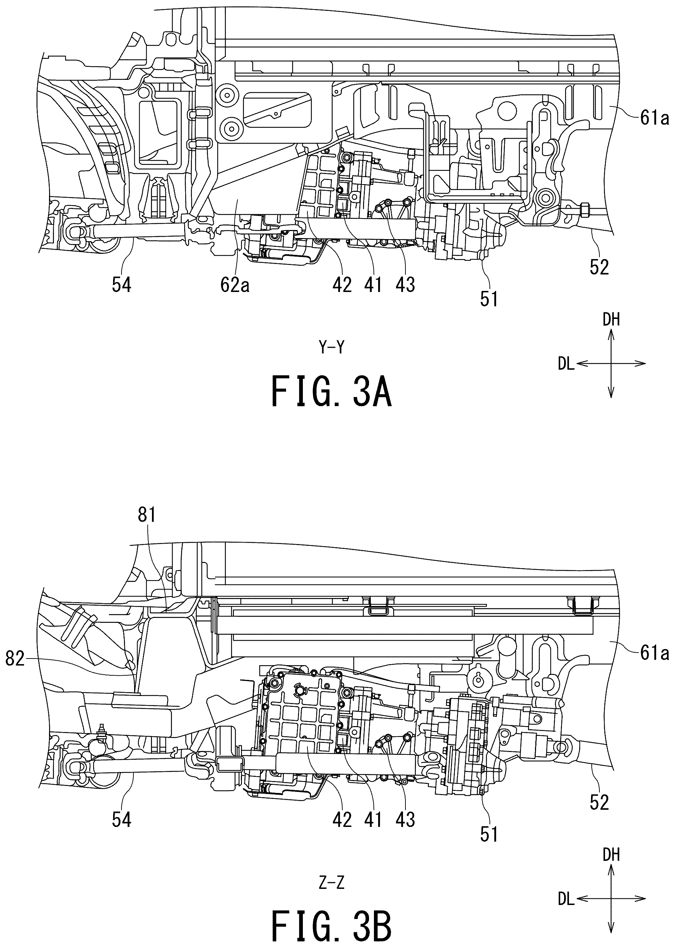

FIG. 1 is a side view of an electric vehicle (hereinafter sometimes simply referred to as "vehicle") V according to one embodiment of the present invention. FIG. 2 is a cross-sectional view of the vehicle V taken along line X-X in FIG. 1, and FIGS. 3A and 3B are cross-sectional views of the vehicle V taken along lines Y-Y and Z-Z in FIG. 2. The cross-section along line Y-Y is shown in FIG. 3A, and the cross-section along line Z-Z is shown in FIG. 3B.

In FIG. 1, arrow DL indicates the longitudinal direction of the vehicle V, and arrow DH indicates the vertical direction of the vehicle V. The vehicle longitudinal direction DL corresponds to the front-rear direction of the vehicle V.

In the drawing, the left side corresponds to the front side of the vehicle V, and the right side corresponds to the rear side.

In the following description, the vertical direction perpendicular to the ground is indicated by arrow DH, and the width or lateral direction of the vehicle V is indicated by arrow DW (see FIG. 2). The right-hand side is defined as the right side when facing forward, and the left-hand side is defined as the left side.

In this embodiment, the electric vehicle V is a flat-body type compact EV truck, and includes a cab 1 and a cargo bed 2.

As shown in FIG. 1, the cab 1 is provided at the front portion of the vehicle V and includes a driver's seat for a driver to sit on and a passenger seat for an occupant to sit on within a cabin space. The cab 1 is disposed above a pair of front wheels 31 located on the left and right sides.

The cargo bed 2 is provided behind the cab 1. A cab back panel 11 is mounted to a rear portion 1r of the cab 1. The cab back panel 11 can serve as a support for the cargo when loading elongated cargo such as boards by leaning the cargo against the panel.

The cargo bed 2 extends rearward from a vicinity of the lower end of the cab back panel 11 to a position beyond a pair of rear wheels 32 disposed on the left and right sides. Beneath the cargo bed 2, a drive unit 4 and a power transmission mechanism 5, which will be described later, are arranged.

The cargo bed 2 includes a flat floor portion (hereinafter referred to as "deck floor") 21 on which cargo is loaded. The deck floor 21 is surrounded on four sides by the rear portion 1r of the cab 1 and by movable gates 22, 23, and 24, commonly referred to as "side boards." Specifically, the cargo bed 2 includes, as the movable gates, a left side gate 22 provided at the left end of the deck floor 21, a right side gate 23 provided at the right end of the deck floor 21, and a rear gate 24 provided at the rear end of the deck floor 21. The deck floor 21 has a rectangular shape elongated in the vehicle longitudinal direction DL and forms a cargo-receiving surface of the cargo bed 2.

The left side gate 22 and the right side gate 23 are rotatably supported relative to the deck floor 21 by side hinges (not shown) provided at respective lateral edges of the deck floor 21. Each of the left and right side gates 22, 23 can be rotated approximately 90° outward or laterally from a closed position to an open position about the corresponding side hinge.

The rear gate 24 is rotatably supported relative to the deck floor 21 by a rear hinge (not shown) provided at the rear end of the deck floor 21, and is rotatable between a closed position and an open position about the rear hinge. In the closed position, the rear gate 24 stands upright perpendicular to the deck floor 21 and abuts against the rear ends of the left and right side gates 22, 23, thereby defining the rear boundary of the cargo space above the deck floor 21. In the open position, the rear gate 24 lies parallel to the deck floor 21, or horizontally similar to the left and right side gates 22, 23, thereby opening the deck floor 21 rearward.

The cargo bed 2 further includes a rear downward-extension portion 25 that extends vertically downward from the rear end of the deck floor 21 beneath the rear gate 24. The rear downward-extension portion 25 is provided with a tail lamp unit, a backup lamp, and a rear reflector (not shown).

### (Drive Unit and Power Transmission Mechanism)

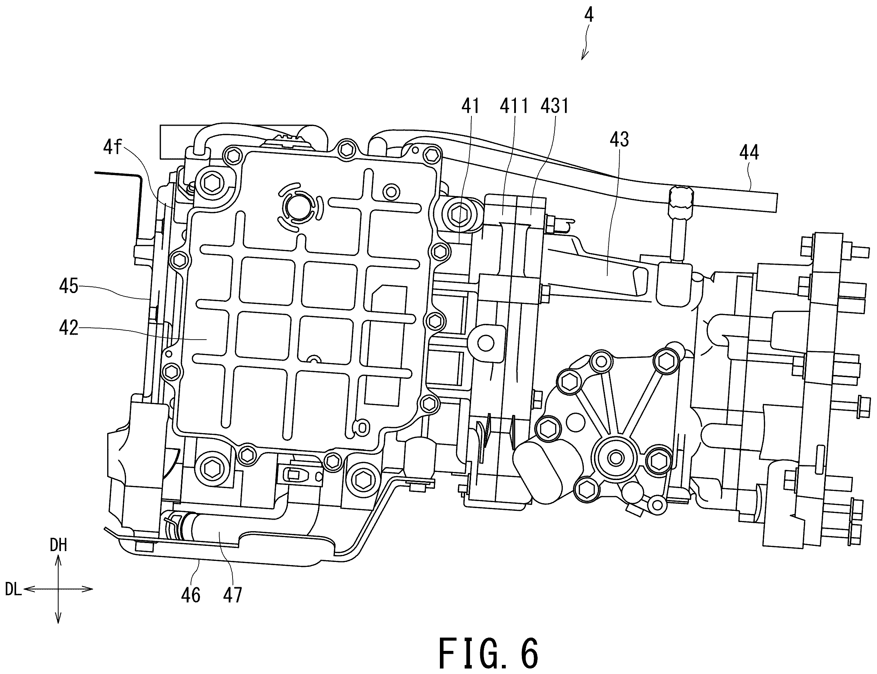

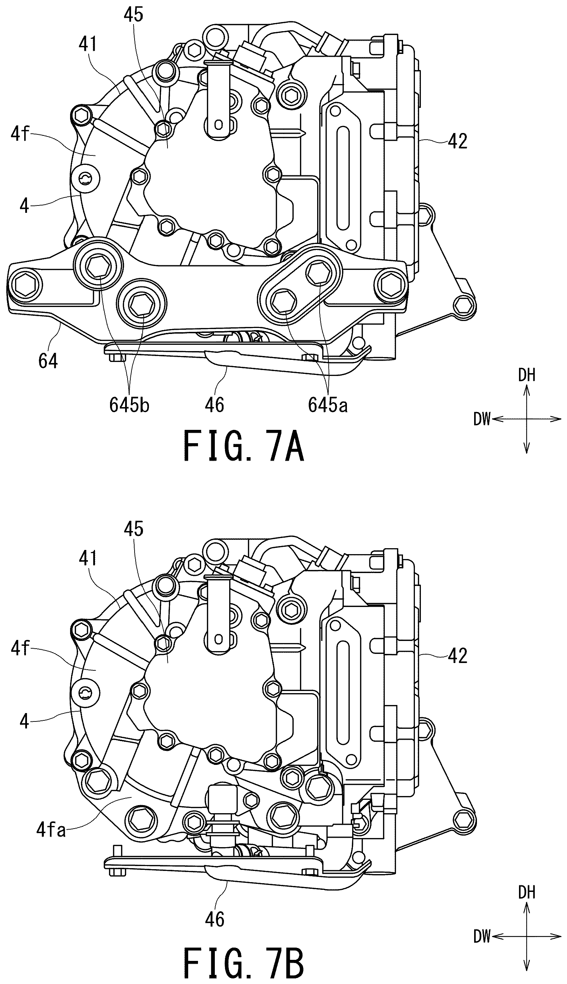

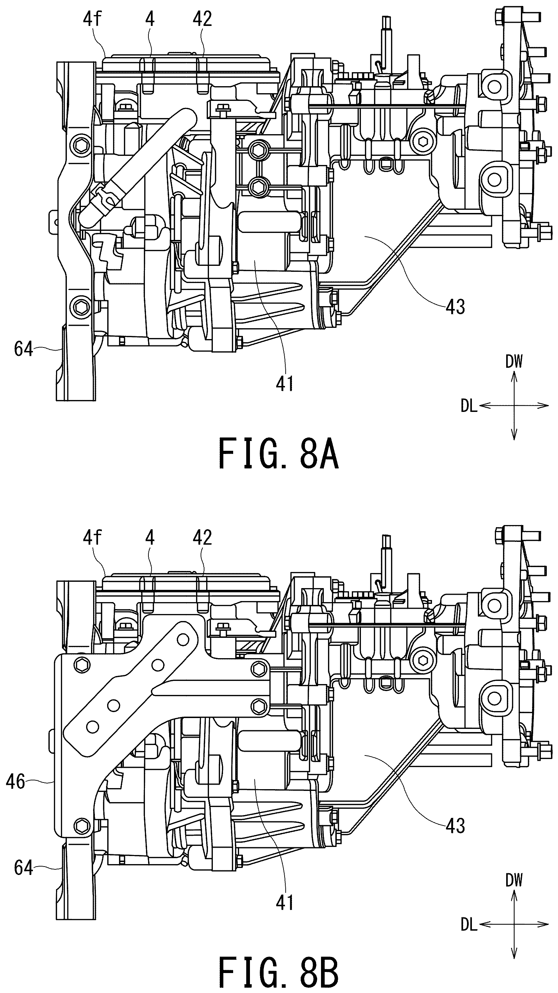

FIG. 6 is a side view of a drive unit 4 provided in the electric vehicle V according to the present embodiment, as viewed from the left side. FIGS. 7A and 7B are front views of the drive unit 4, and FIG. 8A and 8B are bottom views thereof.

The electric vehicle V is equipped with the drive unit 4 serving as a driving source for propelling the vehicle V.

As shown in FIG. 6, the drive unit 4 includes, as principal components, an electric motor 41, an inverter 42, and a reduction mechanism 43. The drive unit 4 is disposed between the front wheels 31 and the rear wheels 32 in the longitudinal direction DL of the vehicle V, specifically beneath the cargo bed 2 and behind the cab 1, in proximity to the lower-end portion of the cab 1 (see FIGS. 2 and 3).

The electric motor 41 may be, for example, a permanent magnet synchronous motor, arranged such that its rotational axis extends along the vehicle longitudinal direction DL. The term "rotational axis" refers to the rotational axis of the rotor of the electric motor 41, specifically the central axis of the rotor shaft. In other words, the rotational axis of the electric motor 41 is oriented perpendicular to the lateral direction DW of the vehicle V. The electric motor 41 is not limited to a permanent magnet synchronous motor, but may alternatively be an induction motor or a switched reluctance motor, or other types of AC motors.

The electric vehicle V further includes a battery serving as a power source for the electric motor 41. The battery is housed within a battery case 7 described later. In the battery case 7, a plurality of batteries or battery cells are accommodated in the form of a module in which the battery cells are connected in series to one another.

The inverter 42 converts direct current power supplied from the battery housed in the battery case 7 into alternating current power, and adjusts the frequency and amplitude of the drive current to be supplied to the electric motor 41. Accordingly, the rotational speed and torque of the electric motor 41 can be controlled. The inverter 42 is disposed on one side of the electric motor 41 in the vehicle lateral direction DW, and in this embodiment, the inverter 42 is arranged to the left side of the electric motor 41, adjacent to the left side surface of the electric motor 41, and is fastened to the electric motor 41 by bolts or other fastening members.

The reduction mechanism 43 is disposed behind the electric motor 41 and integrally formed therewith. Specifically, the housing of the reduction mechanism 43 and the motor case of the electric motor 41 are joined together via flanges 411 and 431. The reduction mechanism 43 transmits the output of the electric motor 41 to an output shaft (i.e., the rear-wheel drive shaft 52 and the front-wheel drive shaft 54 described later) at a predetermined gear ratio. The gear ratio may be variable, thereby imparting a transmission function to the reduction mechanism 43.

Direct current power from the battery is supplied to the inverter 42 via a high-voltage power supply line 44. The direct current power supplied to the inverter 42 is converted into alternating current power by the inverter 42, and is delivered to the electric motor 41 through power lines disposed inside the housing of the inverter 42.

A rotational position sensor 45 is mounted on the front surface portion 4f of the drive unit 4 to detect the rotational position of the electric motor 41, specifically the rotational position of the rotor (not shown). Based on the detected rotational position, the operating state of the electric motor 41, such as its rotational speed, can be determined.

A protective cover 46 is mounted on the bottom portion of the drive unit 4. Beneath the main body of the drive unit 4, a pipe 47 for circulating cooling water for the electric motor 41 and the inverter 42 is disposed. The protective cover 46 protects the cooling water pipe 47 from contact with foreign objects such as stones.

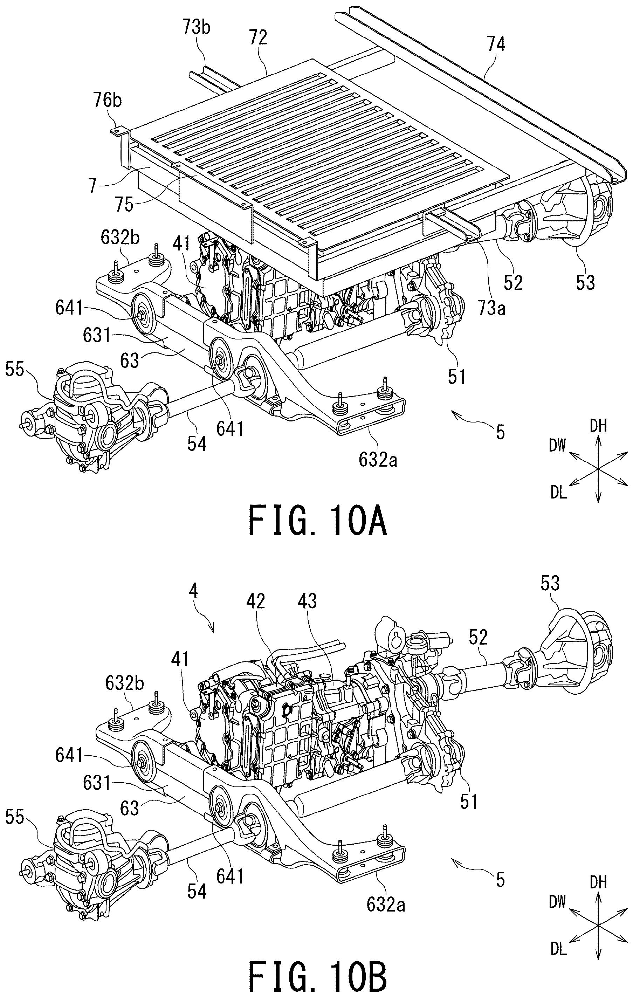

FIGS. 10A and 10B are perspective views showing the drive unit 4 and the power transmission mechanism 5 in an assembled state. FIG. 10A illustrates the relative arrangement of the battery case 7 in the overall assembly by depicting the battery case 7 together with the associated components, while FIG. 10B shows the configuration of the assembly itself with the battery case 7 removed.

The power transmission mechanism 5 includes a power distribution device 51, a rear-wheel drive shaft 52, a rear differential gear 53, a front-wheel drive shaft 54, and a front differential gear 55.

The power distribution device 51 is configured to selectively interrupt transmission of power to the front-wheel drive shaft 54 or the front wheels 31. Accordingly, the electric vehicle V can be operated in either a four-wheel drive mode or a two-wheel drive mode. In the four-wheel drive mode, the power distribution device 51 distributes the power of the drive unit 4, specifically the output of the reduction mechanism 43, to both the front wheels 31 and the rear wheels 32. In the two-wheel drive mode, the power distribution device 51 transmits the output only to the rear wheels 32.

The electric vehicle V is not limited to the above configuration, and may alternatively be operated exclusively in the four-wheel drive mode. Furthermore, the power distribution device 51, the front-wheel drive shaft 54, and the front differential gear 55 may be omitted, such that the electric vehicle V is always operated in the two-wheel drive mode with rear-wheel drive.

During operation in the four-wheel drive mode, the power distribution device 51 distributes the power output from the electric motor 41 via the reduction mechanism 43 to both the rear-wheel drive shaft 52 and the front-wheel drive shaft 54. The power distribution device 51 includes a power transmission medium such as a chain, and transmits a portion of the power to the rear wheels 32 via the rear-wheel drive shaft 52, while transmitting another portion of the power to the front-wheel drive shaft 54 and the front wheels 31 via the power transmission medium.

The rear-wheel drive shaft 52 extends rearward in the vehicle longitudinal direction DL from the power distribution device 51, thereby power-connecting the drive unit 4 to the rear differential gear 53. The power distributed to the rear-wheel drive shaft 52 by the power distribution device 51 is transmitted to the rear differential gear 53. The rear-wheel drive shaft 52 may be embodied as a propeller shaft.

The rear differential gear 53 is disposed between the left and right rear wheels 32, and transmits the power delivered via the rear-wheel drive shaft 52 to each of the left and right rear wheels.

The front-wheel drive shaft 54 extends forward in the vehicle longitudinal direction DL from the power distribution device 51, thereby power-connecting the drive unit 4 to the front differential gear 55. The power distributed to the front-wheel drive shaft 54 by the power distribution device 51 is transmitted to the front differential gear 55. The front-wheel drive shaft 54, similar to the rear-wheel drive shaft 52, may be embodied as a propeller shaft.

The front differential gear 55 is disposed between the left and right front wheels 31, and transmits the power delivered via the front-wheel drive shaft 54 to each of the left front wheel 31a and the right front wheel 31b (see FIG. 2).

### (Support Structure for the Drive Unit)

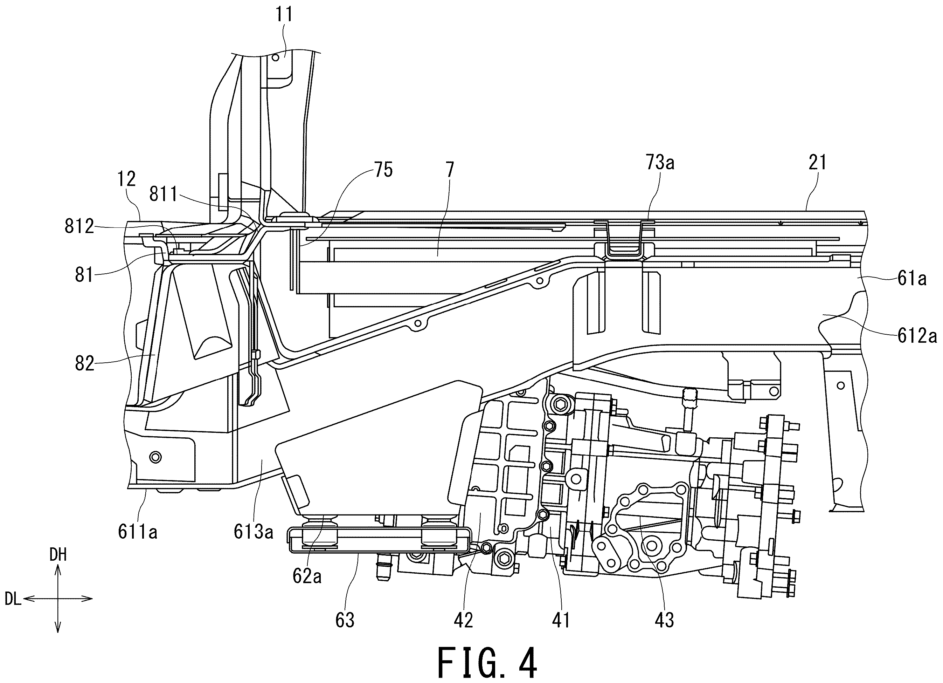

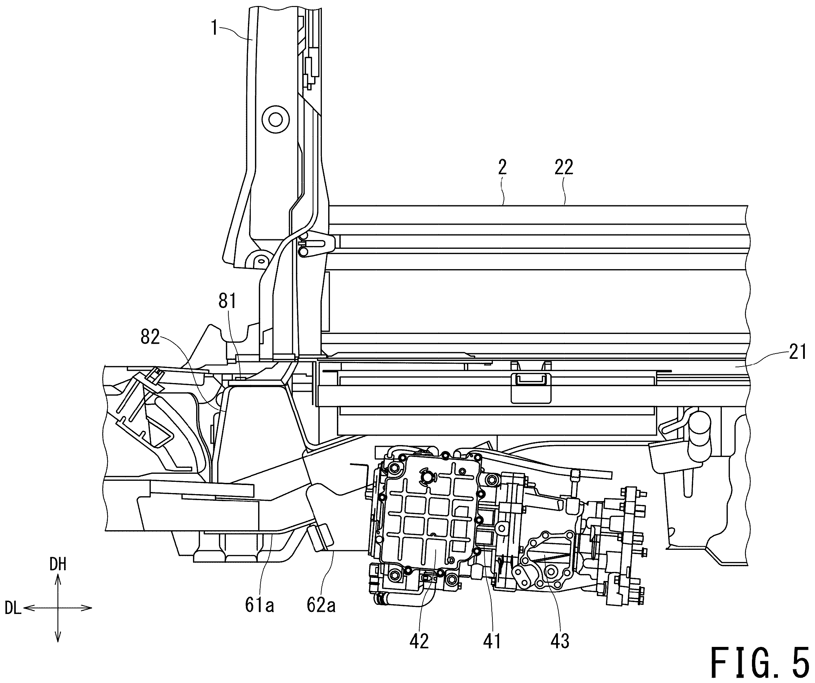

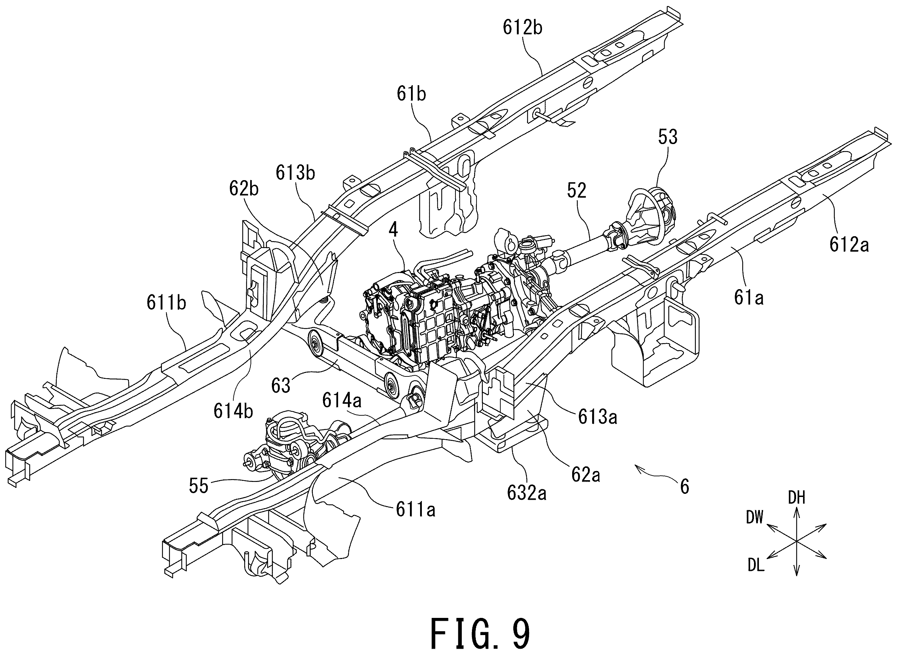

FIGS. 4, 5, and 9 illustrate a support structure for a drive unit 4 according to the present embodiment. FIGS. 4 and 5 show the positional relationship among the drive unit 4, a side frame 61a, and a bracket 62a. FIG. 4 is an enlarged view of the cross section shown in FIG. 3A, and FIG. 5 is an enlarged view of the cross section shown in FIG. 3B. FIG. 9 is a perspective view showing the drive unit 4, the side frames 61a and 61b, and a support mechanism 6 of the electric vehicle V in an assembled state.

As shown in FIG. 9, the electric vehicle V includes a pair of side frames 61a and 61b. The pair of side frames 61a and 61b respectively include front frame portions 611a and 611b, rear frame portions 612a and 612b, and connecting portions 613a and 613b.

The front frame portions 611a and 611b are disposed at a lower front region of the electric vehicle V and extend in the vehicle longitudinal direction DL.

The rear frame portions 612a and 612b are disposed rearward of the front frame portions 611a and 611b and are positioned above the front frame portions 611a and 611b. The rear frame portions 612a and 612b extend substantially parallel to the front frame portions 611a and 611b in the vehicle longitudinal direction DL.

The connecting portions 613a and 613b are connected to rear end portions of the front frame portions 611a and 611b, extend obliquely upward toward the rear, and are connected to front end portions of the rear frame portions 612a and 612b. In other words, the connecting portions 613a and 613b join the front frame portions 611a and 611b to the rear frame portions 612a and 612b, thereby integrally coupling them.

A side frame on the left side (hereinafter referred to as "left side frame") 61a is formed by the front frame portion 611a, the rear frame portion 612a, and the connecting portion 613a arranged on the left side of a vehicle body centerline CL of the electric vehicle V extending in the vehicle longitudinal direction DL (hereinafter sometimes referred to as "fore-and-aft centerline"). Likewise, a side frame on the right side (hereinafter referred to as "right side frame") 61b is formed by the front frame portion 611b, the rear frame portion 612b, and the connecting portion 613b arranged on the right side of the fore-and-aft centerline.

The left side frame 61a and the right side frame 61b are spaced apart from each other in the vehicle lateral direction DW and are arranged parallel to each other. The left and right side frames 61a and 61b are interconnected each other by a plurality of frame cross members (not shown) extending across the vehicle lateral direction DW between the pair of side frames 61a and 61b. A vehicle body frame of the electric vehicle V is constituted as an assembly of the pair of side frames 61a and 61b and the plurality of frame cross members.

A cab 1 is disposed above the front frame portions 611a and 611b, and a cargo bed 2 is disposed above the rear frame portions 612a and 612b. The front wheels 31 are suspended from the front frame portions 611a and 611b, and the rear wheels 32 are suspended from the rear frame portions 612a and 612b. The connecting portions 613a and 613b are located between the cab 1 and the cargo bed 2, specifically in a region obliquely downward and rearward of a rear surface portion 1r of the cab 1 or a cab back panel 11, and close to the rear surface portion 1r or the cab back panel 11.

In this embodiment, inwardly inclined portions 614a and 614b are formed in the connecting portions 613a and 613b, respectively, so as to narrow the distance between the left and right connecting portions 613a and 613b provided respectively in the left and right side frames 61a and 61b. The inwardly inclined portions 614a and 614b are formed in each of the left and right side frames 61a and 61b over a predetermined range in the vehicle longitudinal direction DL, extending from the connecting portions 613a and 613b beyond the connection or boundary with the front frame portions 611a and 611b (that is, beyond the front end edges of the connecting portions 613a and 613b). Accordingly, in the pair of side frames 61a and 61b, the spacing between the regions of the front frame portions 611a and 611b located forward of the inwardly inclined portions 614a and 614b is narrower than the spacing between the rear frame portions 612a and 612b.

### (Detailed Configuration of the Support Mechanism)

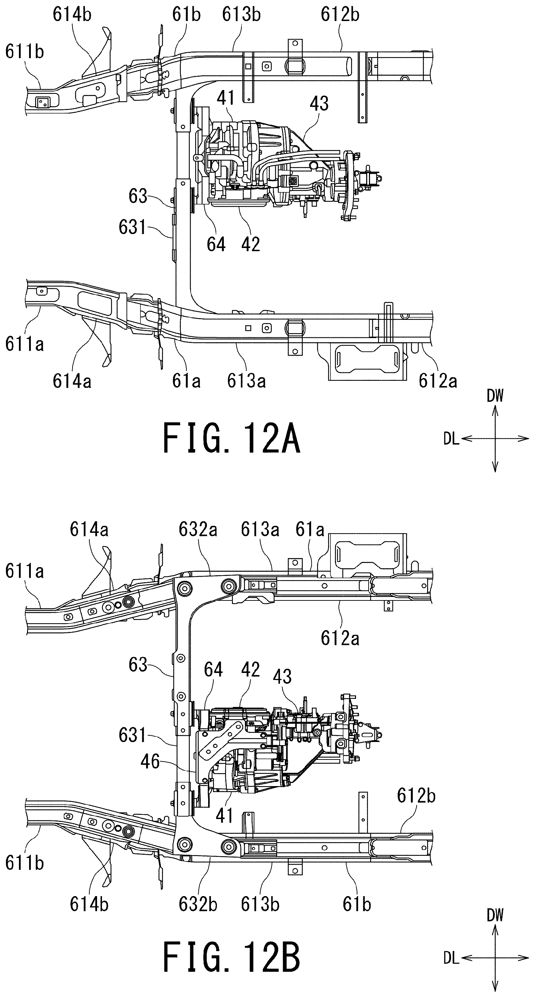

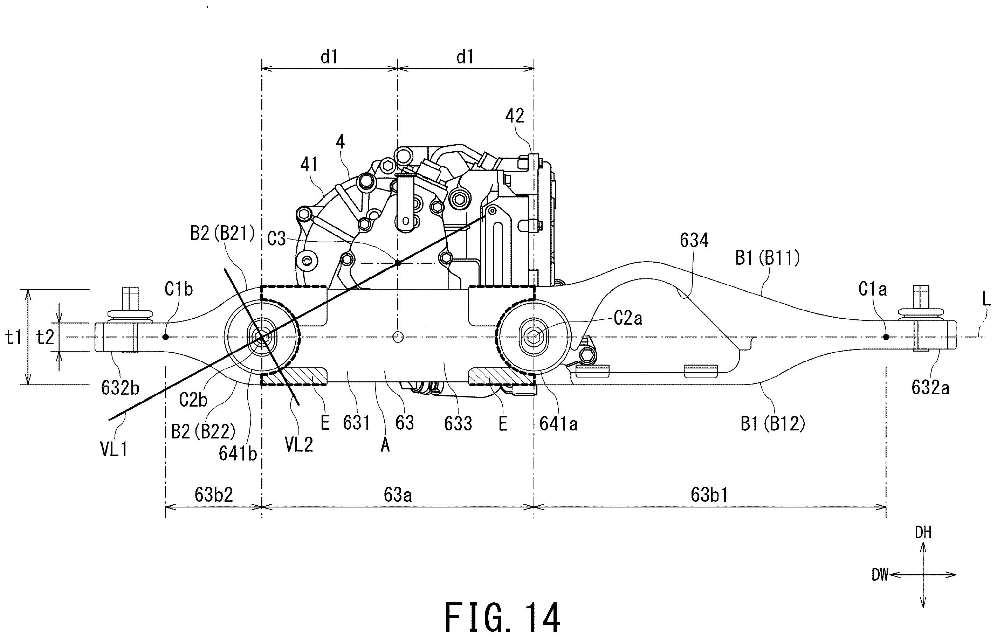

FIG. 12A and 12B illustrate the positional relationship among the drive unit 4, the side frames 61a and 61b, and a cross member 63 in the electric vehicle V in a plan view (FIG. 12A) and a bottom view (FIG. 12B). FIG. 14 is a front view showing the positional relationship between the drive unit 4 and the cross member 63. Reference is also made to FIG. 9.

As shown in FIG. 9, in the present embodiment, a support mechanism 6 for the drive unit 4 is provided, and the drive unit 4 is supported relative to the left and right side frames 61a and 61b by the support mechanism 6.

The support mechanism 6 includes brackets 62a and 62b, and the cross member 63.

The brackets 62a and 62b (hereinafter collectively referred to as "side brackets") are mounted respectively to the left side frame 61a and the right side frame 61b, and the drive unit 4 is suspended and supported between the left and right side brackets 62a and 62b.

In this embodiment, the side brackets 62a and 62b are attached to the connecting portions 613a and 613b of the left and right side frames 61a and 61b, respectively. More specifically, the side brackets 62a and 62b are mounted at a position near the front ends of the connecting portions 613a and 613b, closer to the front frame portions 611a and 611b. The side brackets 62a and 62b are suspended downward from the connecting portions 613a and 613b and extend below the lower surfaces of the front frame portions 611a and 611b. In other words, the lower end portions of the side brackets 62a and 62b are positioned below the front frame portions 611a and 611b.

The cross member 63 extends across the vehicle lateral direction DW between the left and right side brackets 62a and 62b.

As shown in FIGS. 12A and 12B, the drive unit 4 is mounted to the cross member 63 and is disposed between the pair of side frames 61a and 61b. Thus, the drive unit 4 is in a state where it is indirectly supported relative to the pair of side frames 61a and 61b via the cross member 63. The drive unit 4 and the cross member 63 are arranged such that the cross member 63 extends across the front side of the drive unit 4 in the vehicle lateral direction DW.

### (Configuration of the Cross Member)

Referring again to FIGS. 12 and 14, and as shown in FIG. 12B, the cross member 63 includes a main body portion 631 and a pair of coupling portions 632a and 632b.

As shown in FIG. 14, the main body portion 631 extends in the vehicle lateral direction DW at a position forward of the drive unit 4. The cross member 63 includes, at a location of the main body portion 631 that is offset to the right relative to the center in the vehicle lateral direction DW, a mounting portion 633 to which the drive unit 4 is mounted. That is, in this embodiment, the mounting portion 633 for the drive unit 4 is formed in the main body portion 631 of the cross member 63. The drive unit 4 is mounted to the cross member 63 at the mounting portion 633.

The mounting portion 633 is offset to one side relative to the fore-and-aft centerline of the vehicle V in order to secure a space for accommodating the front-wheel drive shaft 54 that transmits power from the drive unit 4 to the front wheels 31. This layout also takes into account the overall weight balance of the assembly including the drive unit 4 and the power transmission mechanism 5. The main body portion 631 of the cross member 63 is provided with an opening 634 extending through it in the vehicle longitudinal direction DL, and the front-wheel drive shaft 54 is disposed through this opening 634.

The pair of coupling portions 632a and 632b are continuously formed at the opposite ends of the main body portion 631 in the vehicle lateral direction DW. The cross member 63 is coupled to the left and right side brackets 62a and 62b at these coupling portions 632a and 632b.

As shown in FIGS. 12A and 12B, the coupling portions 632a and 632b extend rearward in the vehicle longitudinal direction DL from their connection to the main body portion 631. In other words, the coupling portions 632a and 632b have a shape that is elongated in the vehicle longitudinal direction DL relative to the vehicle lateral direction DW, and its dimension in the vehicle longitudinal direction DL is greater than that of the main body portion 631 in the same direction. The coupling portions 632a and 632b are coupled to the side brackets 62a and 62b at multiple positions spaced apart in the vehicle longitudinal direction DL.

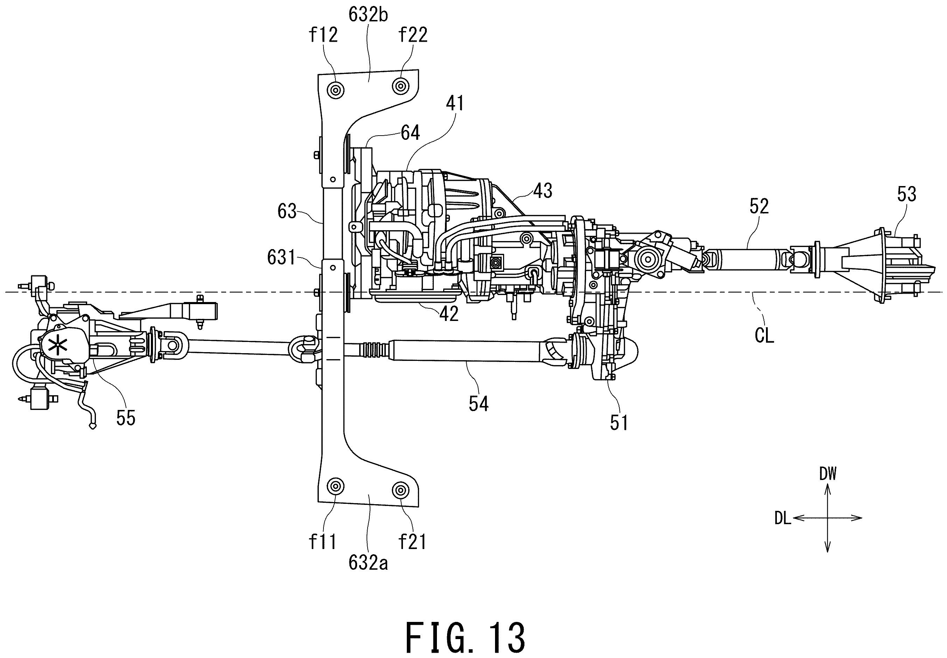

FIG. 13 is a plan view showing the drive unit 4 and surrounding components (including the power transmission mechanism 5 and the cross member 63) provided in the electric vehicle V in an assembled state.

The cross member 63 is fixed to the side brackets 62a and 62b by fastening members such as bolts.

As shown in FIG. 13, the coupling portions 632a and 632b include first fastening portions f11 and f12 located on extensions of the main body portion 631 in the vehicle lateral direction DW, and also second fastening portions f21 and f22 located rearward of the first fastening portions f11 and f12. The second fastening portions f21 and f22 are positioned outward in the vehicle lateral direction DW relative to the first fastening portions f11 and f12.

In other words, on the left side of the main body portion 631, the second fastening portion f21 is located to the left of the first fastening portion f11, and on the right side of the main body portion 631, the second fastening portion f22 is located to the right of the first fastening portion f12.

Accordingly, in the pair of coupling portions 632a and 632b, the spacing between the second fastening portions f21 and f22 is greater than the spacing between the first fastening portions f11 and f12. As described above, this is because the reduction in spacing between the pair of side frames 61a and 61b is formed over a predetermined range extending from the connecting portions 613a and 613b (specifically, the mid portions of the connecting portions 613a and 613b in the present embodiment) toward the front frame portions 611a and 611b (see FIGS. 12A and 12B). Such a configuration contributes to improved support stability of the drive unit 4 by the cross member 63.

As shown in FIGS. 12A and 12B, the drive unit 4 is coupled to the cross member 63 via a bracket 64 (hereinafter referred to as "front bracket").

Referring also to FIGS. 7A and 7B, the front bracket 64 has an elongated shape in the vehicle lateral direction DW relative to the vertical direction DH. The front bracket 64 is fixed to the front surface portion 4f of the drive unit 4 at multiple locations spaced apart in the vehicle lateral direction DW by fastening members 645a and 645b such as bolts.

In this embodiment, the front bracket 64 is mounted to the drive unit 4 at a lower front portion 4fa of the front surface portion 4f, which is located below the rotational axis of the electric motor 41. The motor case of the electric motor 41 extends radially outward from the rotational axis, and a mounting portion (e.g., a bolt insertion hole) to which the front bracket 64 is secured is formed in this extension. Fastening members 645a and 645b described above are threaded into these mounting portions, thereby attaching the front bracket 64 to the drive unit 4.

The fastening members 645a and 645b are provided on respective sides of the rotational axis of the electric motor 41 in the vehicle lateral direction DW, and in this embodiment, a pair of fastening members are provided on each side. That is, a pair of first fastening members 645a are disposed on one side of the rotational axis, and another pair of second fastening members 645b are disposed on the opposite side. The pair of first fastening members 645a and the pair of second fastening members 645b are arranged circumferentially around the rotational axis with spacing therebetween. The two first fastening members 645a are spaced apart from each other in the circumferential direction, and likewise, the two second fastening 645b are spaced apart from each other in the circumferential direction.

The front bracket 64 is positioned so as to overlap the lower front portion 4fa of the drive unit 4 when viewed from the front of the electric vehicle V in the vehicle longitudinal direction DL.

The front bracket 64 is mounted to the cross member 63 via mount bushes 641.

As shown in FIG. 14, the mount bushes 641 (641a, 641b) are provided at multiple locations on the cross member 63, the locations being spaced apart from each other in the vehicle lateral direction DW.

More specifically, one mount bush 641 is provided on each side of the rotational axis of the electric motor 41 in the vehicle lateral direction DW. One mount bush 641a located on the left side of the rotational axis (hereinafter referred to as "left mount bush") and another mount bush 641b located on the right side of the rotational axis (hereinafter referred to as "right mount bush") are positioned at equal distances d1 from the rotational axis of the electric motor 41 in the vehicle lateral direction DW.

The first fastening members 645a and the second fastening members 645b described above are in a state where they are sandwiched between the left mount bush 641a and the right mount bush 641b in the vehicle lateral direction DW. In the vertical direction DH, the left mount bush 641a is located between the pair of first fastening members 645a arranged on the left side, and the right mount bush 641b is located between the pair of second fastening members 645b arranged on the right side.

An axial member for mounting a bush rubber is attached to the front bracket 64, while a cylindrical retaining frame is provided on the cross member 63. The bush rubber is disposed between the axial member and the retaining frame. Accordingly, the front bracket 64 is mounted to the cross member 63 via the bush rubber, and the mount bushes 641a and 641b elastically support the drive unit 4 relative to the cross member 63. The bush rubber suppresses transmission of vibration from the drive unit 4, particularly from the electric motor 41, to the cross member 63.

When the front bracket 64 is mounted to the cross member 63, the mount bushes 641a and 641b are positioned below the rotational axis of the electric motor 41. FIG. 14 illustrates the rotational axis C3 of the electric motor 41, which corresponds to the central axis of the rotor shaft and is referred to herein as the "rotational-shaft center" in the front view shown in FIG. 14. The front bracket 64 is sandwiched between the drive unit 4 and the cross member 63 in the vehicle longitudinal direction DL and is concealed behind the cross member 63 in the front view of the electric vehicle V.

In this embodiment, the main body portion 631 of the cross member 63 is formed from separate members corresponding to an intermediate portion 63a located between the pair of mount bushes 641a and 641b arranged in the vehicle lateral direction DW, and a pair of arm portions 63b1 and 63b2 extending outward in the vehicle lateral direction DW from the intermediate portion 63a.

A member A1 forming the intermediate portion 63a (hereinafter referred to as "first member") corresponds to the "first member" of the present embodiment. Members B1 and B2 forming the respective arm portions 63b1 and 63b2 (hereinafter referred to as "second members") correspond to the "second members" of the present embodiment.

The intermediate portion 63a has a uniform vertical dimension (hereinafter sometimes referred to as "thickness") t1 across the entire vehicle lateral direction DW. In contrast, the pair of arm portions 63b1 and 63b2 are formed such that their vertical dimension (thickness) t2 gradually decreases from the connection to the intermediate portion 63a toward the connection to the coupling portions 632a and 632b. The thickness of the arm portions 63b1 and 63b2 at their connection to the intermediate portion 63a is equal to the thickness t1 of the intermediate portion 63a, while the thickness t2 of the arm portions 63b1 and 63b2 at the outer ends is smaller than the thickness t1 of the intermediate portion 63a.

The first arm portion 63b1 extending leftward with respect to the intermediate portion 63a is connected at its outer end to the left coupling portion 632a, and the second arm portion 63b2 extending rightward is connected at its outer end to the right coupling portion 632b. Thus, the thickness of each coupling portion 632a and 632b on the respective sides is equal to the thickness t2 of the outer ends of the respective arm portions 63b1 and 63b2.

The outer end of the first arm portion 63b1, the left mount bush 641a, the right mount bush 641b, and the outer end of the second arm portion 63b2 are aligned in the vehicle lateral direction DW. Specifically, the vertical centers C1a and C1b of the outer ends of the first and second arm portions 63b1 and 63b2, respectively, and the centers C2a and C2b of the left and right mount bushes 641a and 641b are aligned along a straight line L extending in the vehicle lateral direction DW.

In this embodiment, the second members B1 and B2 extend in the vehicle lateral direction DW from the regions corresponding to the first and second arm portions 63b1 and 63b2 across the centers C2a and C2b of the left and right mount bushes 641a and 641b, and form a reinforcement portion E in the region corresponding to the intermediate portion 63a. FIG. 14 schematically illustrates the reinforcement portion E using hatching.

In the front view of FIG. 14 as seen from the front of the electric vehicle V in the vehicle longitudinal direction DL, a straight line connecting the rotational-shaft center C3 of the electric motor 41 and the centers C2a and C2b of the left and right mount bushes 641a and 641b is defined as a first virtual line VL1. A second virtual line VL2 is defined as a straight line passing through the centers C2a and C2b of the left and right mount bushes 641a and 641b and extending perpendicular to the first virtual line VL1. The second members B1 and B2 extend below the left and right mount bushes 641a and 641b and cross the second virtual line VL2 from the outer side toward the inner side in the vehicle lateral direction DW.

Taking the second member B2 forming the second arm portion 63b2 as an example, the second member B2 extends below the center C2b of the right mount bush 641b, crosses the second virtual line VL2 from the right side toward the left side, and extends toward the center of the intermediate portion 63a in the vehicle lateral direction DW.

Accordingly, in the reinforcement portion E, the second member B2 overlaps the first member A1 forming the intermediate portion 63a in the vehicle lateral direction DW between the left and right mount bushes 641a and 641b, specifically between the left and right second virtual lines VL2. In other words, in a cross-section of the reinforcement portion E taken perpendicular to the vehicle lateral direction DW, the first member A1 and the second member B2 are positioned in an overlapping relationship in the front-rear direction.

In this embodiment, each of the second members B1 and B2 forming the first and second arm portions 63b1 and 63b2 is configured to be separable into upper and lower portions. That is, each second member B1, B2 is formed in two parts, namely an upper half portion B11, B21 and a lower half portion B12, B22. For example, the second member B2 forming the second arm portion 63b2 is divided into an upper half portion B21 and a lower half portion B22 based on the position of an opening or placement hole for accommodating the right mount bush 641b.

In contrast, the first member A1 is formed as an integral or single-piece member.

An opening 634 through which the front-wheel drive shaft 54 passes is formed in the first arm portion 63b1.

Referring again to FIG. 4, in the state where the drive unit 4 is mounted to the cross member 63 and supported relative to the pair of side frames 61a and 61b, an inverter 42 is arranged such that, in a side view of the electric vehicle V as seen from one side in the vehicle lateral direction DW, specifically from the left side of the electric vehicle V as shown in FIG. 4, a portion of the inverter 42 overlaps a side bracket 62a.

In this embodiment, the inverter 42 is disposed to the left of the electric motor 41, adjacent to its left side surface. In the side view (i.e., as viewed from the left side), the inverter 42 not only overlaps the side bracket 62a but also overlaps a connecting portion 613a of the left side frame 61a, which extends diagonally upward toward the rear. By overlapping both the side bracket 62a and the connecting portion 613a of the left side frame 61a, the inverter 42 can be concealed over a wider area from the outside, thereby enabling the inverter 42 to be protected more robustly and across a broader region.

### (Battery Case and Suspension Structure)

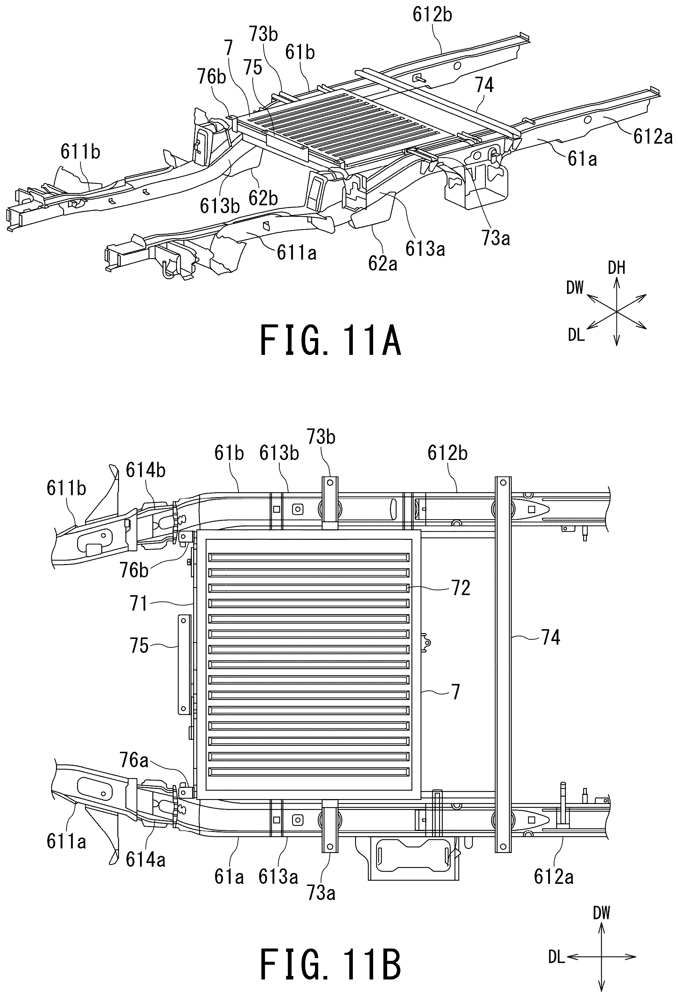

FIG. 11A is a perspective view illustrating the positional relationship between a battery case 7 and side frames 61a and 61b in the electric vehicle V, and FIG. 11B is a plan view illustrating the same.

As described above, the battery case 7 is suspended between the left and right side frames 61a and 61b and is disposed above the drive unit 4.

As shown in FIG. 11B, the battery case 7 is a flat case elongated in the vehicle lateral direction DW relative to the vehicle longitudinal direction DL, and has a dimension substantially equal to the spacing between the rear frame portions 612a and 612b of the pair of side frames 61a and 61b in the vehicle lateral direction DW. That is, the left or right side surface of the battery case 7, which faces outward in the vehicle lateral direction DW, is positioned close to the inner surface of the corresponding side frame 61a or 61b.

The battery case 7 is disposed between the pair of side frames 61a and 61b and is suspended relative to these side frames 61a and 61b.

Specifically, the battery case 7 is suspended between the rear frame portion 612a of the left side frame 61a and the rear frame portion 612b of the right side frame 61b in the vehicle lateral direction DW. In this state, a front end portion or front surface portion 71 of the battery case 7 is positioned close to a cab back panel 11 in the vehicle longitudinal direction DL, and an upper cover or upper surface portion 72 is positioned close to a deck floor 21 of the cargo bed 2 in the vertical direction DH.

The battery case 7 is supported at multiple locations (two on each side in the present embodiment) spaced apart in the fore-and-aft direction by a plurality of brackets 73 and 74 relative to the left and right side frames 61a and 61b. The battery case 7 includes a case body and a pair of support arms joined to side surfaces of the case body and extending rearward from the case body. The battery case 7 is supported by brackets 73a and 73b (hereinafter referred to as "case-side brackets") mounted near the center of the side surfaces of the case body, and by a bracket 74 (hereinafter referred to as "case-rear bracket") extending between the pair of support arms near their rear ends. The case-side brackets 73a and 73b are cantilevered relative to the case body.

A cross member 81 (hereinafter referred to as "cab cross member") is disposed in front of the battery case 7, and a bracket 75 (hereinafter referred to as "case-front bracket") extending downward from the cab cross member 81 is attached thereto (see FIG. 4).

The front end portion 71 of the battery case 7 is joined to the case-front bracket 75. Thus, the battery case 7 is supported not only by the left and right side frames 61a and 61b but also by the cab cross member 81.

A pair of pillar portions (hereinafter referred to as "side pillars") 82 extend upward from the respective side frames 61a and 61b, and the cab cross member 81 extends across the vehicle lateral direction DW between these side pillars 82 (see FIG. 5). The side pillars 82 rise from regions in the side frames 61a and 61b near the boundary between the front frame portions 611a and 611b and the connecting portions 613a and 613b.

In addition to the case-front bracket 75, at the front end portion 71 of the battery case 7, auxiliary brackets 76a and 76b are provided on the left and right sides of the case-front bracket 75. Thus, although indirectly, the battery case 7 supported by the cab cross member 81 is supported at seven or more locations relative to the vehicle body frame including the pair of side frames 61a and 61b, via the case-side brackets 73, the case-rear bracket 74, the case-front bracket 75, and the auxiliary brackets 76.

As shown in FIG. 4, the cab cross member 81 is disposed below a rear end portion of a cab 1 and supports a floor portion (hereinafter referred to as "cab floor") 12 of the cab 1. The cab cross member 81 has a structure with sufficient strength to withstand the weight of the cab 1 and its occupants.

In a vertical cross section along the vehicle longitudinal direction DL, the cab cross member 81 has an overall upwardly open U-shaped or inverted-hat shape. A rear surface portion 811 of the cab cross member 81, which faces toward the battery case 7, specifically toward the front end surface of the battery case 7, is inclined upward toward the rear in the vehicle longitudinal direction DL. In other words, the cab cross member 81 is formed such that the rear surface portion 811 thereof inclines downward toward the front in the vehicle longitudinal direction DL.

The battery case 7, while being suspended between the pair of side frames 61a and 61b, is positioned downward in an offset manner from the rear surface portion 811 of the cab cross member 81. The battery case 7 and the cab cross member 81 partially overlap in the vehicle longitudinal direction DL. Specifically, the upper surface portion 72 of the battery case 7 overlaps the bottom surface portion 812 of the cab cross member 81 in the vehicle longitudinal direction DL.

Furthermore, the front portion of the battery case 7 extends forward from the rear frame portions 612a and 612b and projects above the connecting portions 613a and 613b, thereby being positioned above the drive unit 4. In this embodiment, the "front portion" of the battery case 7 refers to approximately the front half of the battery case 7 including the front end portion 71. The deck floor 21 of the cargo bed 2 is mounted above the battery case 7 so as to cover it.

Thus, in this embodiment, the battery case 7 is disposed directly below the deck floor 21, and the drive unit 4 is disposed below the battery case 7.

### (Description of Operation and Advantages)

The advantages obtained by the present embodiment will be described below.

First, the cross member 63 extending across the front of the drive unit 4 is configured to include a main body portion 631 having an intermediate portion 63a positioned between mounting portions (e.g., a left mount bush 641a and a right mount bush 641b) to which the drive unit 4 is mounted, and a pair of arm portions 63b1 and 63b2 extending outward from the intermediate portion 63a in the vehicle lateral direction DW. The dimension of the main body portion 631 in the vertical direction DH is reduced from the inner ends toward the outer ends of the arm portions 63b1 and 63b2. The arm portions 63b1 and 63b2 are connected at their respective outer ends to coupling portions 632a and 632b. Furthermore, the outer ends of the arm portions 63b1 and 63b2 are arranged side-by-side with the left mount bush 641a and the right mount bush 641b in the vehicle lateral direction DW.

As a result, the vertical positions of the outer ends of the arm portions 63b1 and 63b2 (i.e., the coupling portions 632a and 632b) and the left and right mount bushes 641a and 641b are aligned with each other in the cross member 63. This alignment suppresses displacement of the cross member 63 caused by vibrations transmitted from the drive unit 4 during vehicle operation, thereby enabling the drive unit 4 to be supported in a stable manner.

Second, the drive unit 4 is mounted to the cross member 63 via the mount bushes 641a and 641b, and the intermediate portion 63a is configured to have the dimension in the vertical direction DH greater than the diameter of the mount bushes 641a and 641b.

This configuration suppresses the transmission of vibration from the drive unit 4 to the cross member 63, further reducing displacement occurring in the cross member 63 and improving support stability.

Third, a front bracket 64 that is coupled to the mount bushes 641a and 641b is attached to a front surface portion 4f of the drive unit 4, and the drive unit 4 is mounted to the cross member 63 via the front bracket 64.

This facilitates supporting the drive unit 4 using the mount bushes 641a and 641b.

Fourth, the cross member 63 is disposed below the rotational axis of the electric motor 41 such that it overlaps a lower front portion 4fa of the drive unit 4, and the front bracket 64 is disposed between the lower front portion 4fa of the drive unit 4 and the cross member 63 so as to be located rearward of (i.e., concealed behind) the cross member 63.

This maintains the support stability of the drive unit 4 while reducing the overall height occupied by the drive unit 4 and its support mechanism 6 (including the front bracket 64 and the cross member 63) in the vertical direction DH, thereby ensuring a sufficient minimum ground clearance of the electric vehicle V.

Fifth, in the main body portion 631 of the cross member 63, the intermediate portion 63a and the pair of arm portions 63b1 and 63b2 are formed as separate members (a first member A1 and second members B1 and B2).

This allows each part of the cross member 63 to be formed from plate materials having optimal thicknesses, ensuring the rigidity of the cross member 63 while reducing its overall weight.

Sixth, the second members B1 and B2 forming the arm portions 63b1 and 63b2 are configured to be separable above and below relative to the mount bushes 641a and 641b.

This enables further optimization of rigidity for the upper and lower portions of the cross member 63.

Seventh, each of the pair of side frames 61a and 61b is provided with a front frame portion 611a, 611b, a rear frame portion 612a, 612b, and a connecting portion 613a, 613b. The cross member 63 is coupled to the respective side frames 61a and 61b at the connecting portions 614a and 614b.

This allows the drive unit 4 and its support mechanism 6 to be arranged efficiently within the limited space below the side frames 61a and 61b.

Eighth, the battery case 7 is suspended and supported between the pair of side frames 61a and 61b, and the drive unit 4 is disposed below the battery case 7.

This enables the battery case 7 to effectively block the propagation of noise generated by the drive unit 4, particularly by the electric motor 41, thereby reducing noise perceived inside the cab 1.

Ninth, in a truck V equipped with an electric drive system (i.e., EV truck), particularly a truck having a cargo bed 2 located behind the cab 1 (e.g., a flatbed truck), the battery case 7 is disposed directly below the deck floor 21.

This enables the battery case 7 and the drive unit 4 to be arranged effectively by making efficient use of the space below the deck floor 21.

In the above description, the electric vehicle V is exemplified as a small flatbed truck; however, the electric vehicle V is not limited to this configuration and may be implemented in other vehicle types. For example, a one-box design vehicle having no hood or only a very short hood and a box-shaped body structure (e.g., van or minivan) may also be employed.

When a one-box design vehicle is employed, front-row seats in a cabin and their floor portion (hereinafter referred to as "front floor") is disposed above the front frame portions 611a and 611b of the pair of side frames 61a and 61b, rear-row seats in the cabin and their floor portion (hereinafter referred to as "rear floor") is disposed above the rear frame portions 612a and 612b. The front floor is supported by the front frame portions 611a and 611b, and the rear floor is supported by the rear frame portions 612a and 612b.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

V electric vehicle
1 cab
2 cargo bed
21 deck floor
22, 23, 24 movable gate
31 front wheel
32 rear wheel
4 drive unit
41 electric motor
42 inverter
43 reduction mechanism
5 power transmission mechanism
51 power distribution device
52 rear-wheel drive shaft
53 rear differential gear
54 front-wheel drive shaft
55 front differential gear
6 support mechanism
61a left side frame
61b right side frame
611a, 611b front frame portion
612a, 612b rear frame portion
613a, 613b connecting portion
62a, 62b side bracket
63 cross member
631 main body portion
632a, 632b connecting portion
63a intermediate portion
63b1, 63b2 arm portion
7 battery case
VL1 first virtual line
VL2 second virtual line
C2a, C2b center of mount bush (mount rubber)
C3 rotational-shaft center of electric motor
A1 first member
B1, B2 second member
E reinforcement portion

## Claims

1. An electric vehicle (V) comprising:
a drive unit (4) serving as a driving power source for propelling the vehicle;
a pair of side frames (61a, 61b) extending in a vehicle longitudinal direction (DL) and arranged spaced apart from each other in a vehicle lateral direction (DW); and
a cross member (63) extending between the pair of side frames (61a, 61b),
wherein the drive unit (4) includes
an electric motor (41) having a rotational axis extending in the vehicle longitudinal direction (DL), and
an inverter (42) configured to control electric power supplied to the electric motor (41),
wherein the drive unit (4) is mounted to the cross member (63) at a plurality of mounting portions (641a, 641b) arranged so as to sandwich the rotational axis in the vehicle lateral direction (DW), and is supported relative to the pair of side frames (61a, 61b) via the cross member (63),
wherein the cross member (63) includes
a main body portion (631) extending in the vehicle lateral direction (DW) in front of the drive unit (4), and
a pair of coupling portions (632a, 632b) provided continuously at opposite ends of the main body portion (631) in the vehicle lateral direction (DW), each of the pair of coupling portions (632a, 632b) being coupled to a corresponding one of the side frames (61a, 61b),
wherein the main body portion (631) includes
an intermediate portion (63a) located between two of the mounting portions (641a, 641b) that sandwich the rotational axis; and
arm portions (63b1, 63b2) extending outward in the vehicle lateral direction (DW) from the intermediate portion (63a),
wherein the main body portion (631) is formed such that a vertical dimension of the arm portions (63b1, 63b2) decreases from an inner side toward an outer side in the vehicle lateral direction (DW), and the arm portions (63b1, 63b2) are connected to the coupling portions (632a, 632b) at outer ends thereof, and
wherein the outer ends of the arm portions (63b1, 63b2) are aligned with the mounting portions (641a, 641b) in the vehicle lateral direction (DW).

2. The electric vehicle (V) according to claim 1, wherein the drive unit (4) is mounted to the cross member (63) using mount bushes (641a, 641b) at the respective two mounting portions.

3. The electric vehicle (V) according to claim 2, wherein a vertical dimension of the intermediate portion (63a) of the main body portion (631) is greater than a diameter of the mount bushes (641a, 641b).

4. The electric vehicle (V) according to claim 2 or 3, further comprising a bracket (64) attached to a front surface portion (4f) of the drive unit (4),
wherein the drive unit (4) is mounted to the cross member (63) via the bracket (64), and
wherein the bracket (64) is connected to the cross member (63) via the mount bushes (641a, 641b).

5. The electric vehicle (V) according to claim 4,
wherein the cross member (63) is disposed below the rotational axis such that the cross member (63) overlaps, in the vehicle longitudinal direction (DL), a lower front portion (4fa) of the drive unit (4), and
wherein the bracket (64) is disposed between the lower front portion (4fa) and the cross member (63) such that the bracket (64) is concealed behind the cross member (63) in a front view of the electric vehicle (V).

6. The electric vehicle (V) according to any one of claims 1 to 5, wherein the main body portion (631) is configured by dividing it into a first member (A1) forming the intermediate portion (63a) and second members (B1, B2) forming the arm portions (63b1, 63b2).

7. The electric vehicle (V) according to claim 6, wherein the second members (B1, B2) are formed so as to be separable above and below relative to the mounting portions (641a, 641b).

8. The electric vehicle (V) according to any one of claims 1 to 7, wherein the pair of side frames (61a, 61b) respectively comprise:
a front frame portion (611a, 611b) extending in the vehicle longitudinal direction (DL);
a rear frame portion (612a, 612b) disposed rearward of and above the front frame portion (611a, 611b) and extending in the vehicle longitudinal direction (DL); and
a connecting portion (613a, 613b) connecting the front frame portion (611a, 611b) and the rear frame portion (612a, 612b) and inclined upward toward the rear, and
wherein the cross member (63) is coupled to the pair of side frames (61a, 61b) at the connecting portions (613a, 613b).

9. The electric vehicle (V) according to any one of claims 1 to 8, further comprising a battery case (7) configured to accommodate a battery capable of storing electric power supplied to the electric motor (41), the battery case (7) being supported between the pair of side frames (61a, 61b),
wherein the drive unit (4) is disposed below the battery case (7).

10. The electric vehicle (V) according to claim 9, further comprising a cab (1) disposed above the front frame portions (611a, 611b),
wherein the rear frame portions (612a, 612b) support a deck floor (21) of a cargo bed (2) disposed behind the cab (1), and
wherein the battery case (7) is disposed directly below the deck floor (21).
